# EUROPEAN PATENT APPLICATION

(11) **EP 1 006 349 A1**
(43) Date of publication of application: **07.06.2000**
(21) Application number: 99309610.6
(22) Date of filing: 30.11.1999
(51) Int. Cl.: G01N 21/88

(54) **Vehicle inspection system**

(30) Priority: 04.12.1998 GB 9826802
(71) Applicant: VDRS Limited, Bristol BS35 3 UP (GB)
(72) Inventor: Kidman, Michael, Farington Gurney, BS39 6UP (GB); McDowall, Charles, Westbury-on-Trym, Bristol BS9 3SY (GB); Burton, Adam, Redland, Bristol, BS6 7UP (GB)
(74) Representative: Beck, Simon Antony

(57) **Abstract**

A vehicle lighting booth (2) is provided with a plurality of cameras (20, 20a, 22, 22a, 24, 24a) and a plurality of lights (12). A controller is arranged to dim or extinguish the lights near a camera being used to capture an image of the vehicle, thereby preventing the image of the vehicle being washed out by the light used to illuminate the vehicle.

## Description

The present invention relates to a vehicle inspection system, and more particularly to an automated vehicle inspection system.

It is known to employ inspectors in a vehicle manufacturing plant in order to check the quality of the finished vehicle. However, this is not the only point at which the quality of the paint work and/or amount of damage on a vehicle needs to be inspected. Typically an automobile will undergo many transportation and handling stages between manufacture and its final delivery to a customer. At each of the stages, it is desirable for the vehicle's status to be assessed before responsibility is passed from one handler to another. It would also be advantageous in the realm of car hire companies to be able to inspect the status of a vehicle both prior to and after hiring in order that any deterioration or damage could be identified.

According to a first aspect of the present invention, there is provided a vehicle inspection system, comprising a vehicle inspection booth, a plurality of cameras for observing a vehicle within the booth, a plurality of controllable light sources, and a light source controller for varying the light output of the light sources as a function of the position of the camera being used to view the vehicle.

The lighting requirement to make an automated inspection of a vehicle is a balance between conflicting requirements. Intuitively, one would expect that a bright pinpoint or elongate light source would be desirable in order that the vehicle would be brightly illuminated. However, in such an arrangement there is a risk that reflection from a reflective, for example lacquered, surface of the vehicle will merely result in the camera seeing an image of the light source. However, the applicant has realised that bright illumination can in fact be counterproductive because the light scattered from a flaw still has to compete at the camera with the light originating from the light source and reflected towards the camera. Thus there is a significant risk that the light from the light source will swamp the image of the defect and consequently the defect will not be located. The applicant has realised that in order to obtain the best results, the light levels within the lighting booth need to be controlled to obtain a spatially varying profile which varies as a function of the camera being used to observe the vehicle in the booth.

Advantageously the lights are arranged in an array along the booth. In a preferred embodiment, the lights are arranged in a linear array adjacent the floor of the booth. The lights may be arranged below the level of the surface on which the vehicle stands. Such an arrangement prevents direct illumination of the vehicle by the light sources.

Advantageously the wall of the booth is curved in order to form a diffuse reflecting surface. Advantageously the curvature is selected such that a light source provides approximately constant illumination along a section of a vehicle adjacent that light source.

Advantageously the walls of the booth are of a neutral colour. Preferably grey which allows a reasonably efficient reflector to be formed whilst also providing a diffuse light source whose image is not seen in the light reflected from the vehicle under test. Thus the cameras observe an image of the vehicle rather than seeing an image of the light source as reflected from the vehicle.

Preferably the cameras are arranged such that a camera, or a bank of cameras, is associated with a respective light source or a group of lights. Thus the camera or bank of cameras may be directly over the light source, or where the light source is elongate, directly over the centre point, or offset therefrom by a predetermined distance.

Preferably the lighting controller is arranged to control the lights such that, when a given camera is being used to observe the vehicle, the or each associated light source is turned down or off. Thus the applicant has realised that, in order to obtain a image of the vehicle without suffering from optical flaring, the light source associated with a camera needs to be dimmed or extinguished.

Advantageously light sources adjacent the camera being used to observe the vehicle are also dimmed or extinguished.

Preferably the cameras are used in sequence in order to capture differing views of the vehicle. The light controller controls the light output such that the light sources adjacent the camera in use are dimmed, thereby ensuring that the image received by the camera does not become "washed out".

Preferably the images captured by the cameras are stored. The stored images create an archive of the vehicle condition such that its status can be checked on an historical basis in order to establish between which periods of time damage may have occurred. The camera views may also be subjected to automated image analysis, for example by a suitably programmed computer or neural network in order to check the status of the vehicle.

Preferably the walls of the inspection booth have a parabolic like profile.

Preferably the ends of the inspection booth are, in use, closed in order to exclude ambient light from entering the booth. Advantageously either end of the booth is provided with a door or shutter, preferably electrically operated, which allows vehicles to enter and exit the booth.

According to a second aspect of the present invention, there is provided a lighting controller for controlling a plurality of lights within an inspection booth, wherein the controller is arranged to vary the intensity of the lights in a predetermined fashion, with those lights adjacent a camera viewing position being dimmed or extinguished whilst a camera at that position is active.

The present invention will further be described, by way of example, with the reference to the accompanying drawings, in which:
Figure 1 schematically illustrates the cross section of an inspection booth constituting an embodiment of the present invention; and
Figure 2 schematically illustrates the floor plan and a row of cameras.

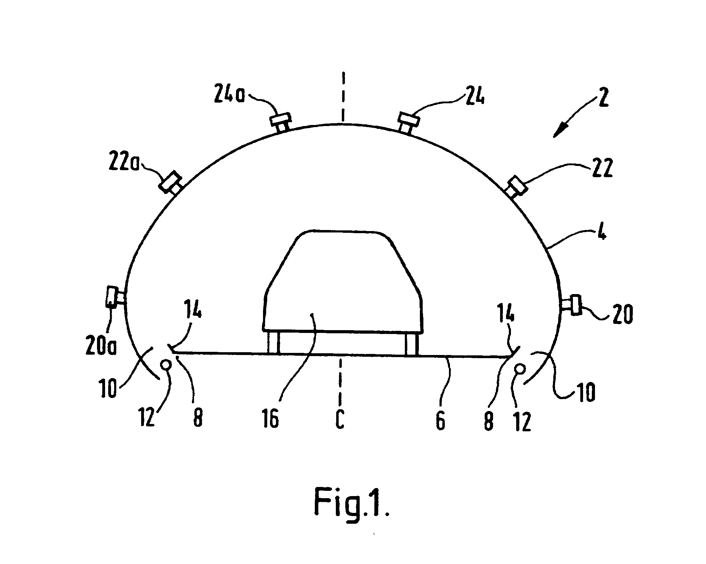

As shown in Figure 1, the booth 2 comprises a gently curving wall 4 which is substantially symmetrical about its centre line C. Each half of the wall 4 approximates a parabolic curve. A raised floor 6 is provided for supporting a vehicle. The edges 8 of the floor 6 do not touch the wall 4, and define a gap 10 through which light from a plurality of light sources 12 can enter the inspection booth. The floor 6 may be provided lip portions 14 which serve to prevent illumination from the light sources 12 falling directly on a vehicle 16 under inspection. The interior surface of the chamber 4 acts as a diffuse reflector in order to provide a diffuse illumination of the vehicle 16 under inspection. The use of diffuse illumination means that an image of the light source reflected from the vehicle is not captured by the cameras.

A plurality of cameras 20, 20a, 22, 22a, 24 and 24a, view the interior of the chamber. The cameras, in an embodiment of the invention, view the vehicle under test through relatively small apertures cut into the wall 4. The cameras are arranged in three horizontal rows, and in columns of three, and symmetrically disposed about the centre line C. Cameras situated at the ends of the chamber are typically angled inwards so as to view the front and rear portions under test.

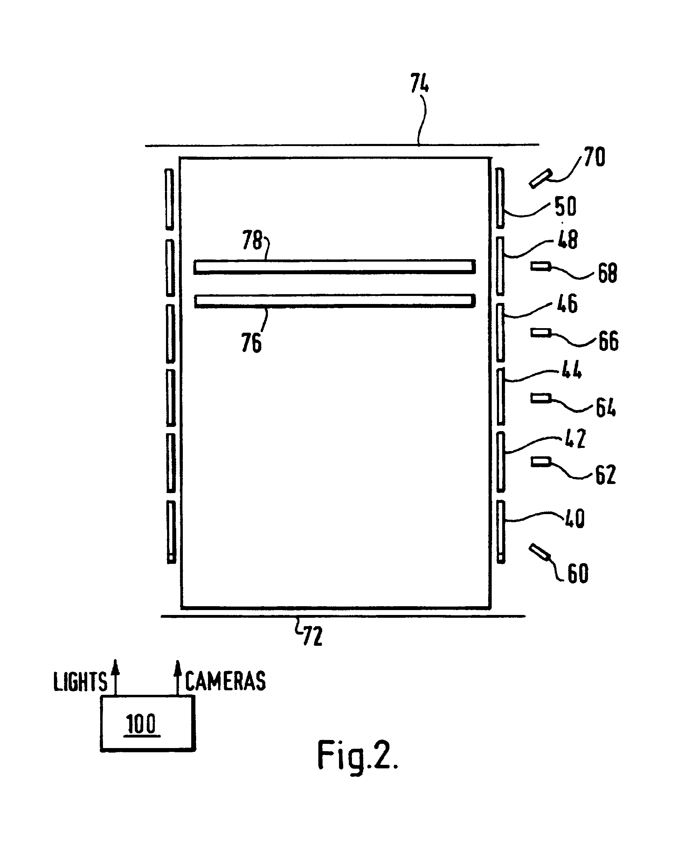

Figure 2 shows a plan view of the chamber showing a series of lights 40 - 50, and plurality of cameras 60 - 70 arranged in a single row. A corresponding set of lights and cameras are arranged on the other side of the inspection tunnel, but are not illustrated for simplicity. The booth is also provided with doors 72 and 74 at opposed ends thereof and vehicle wheel location humps 76 and 78 which provide the vehicle driver with an indication of when the vehicle is properly positioned along the inspection booth.

Once the vehicle is in position, the doors 72 and 74 are closed in order to exclude ambient light.

The cameras are then operated in sequence to record views of the vehicle. In a prototype of the invention, 36 cameras are provided, 18 along each side of the vehicle. A controller 100 has a data bus to select and receive images from the cameras, and a lighting control bus to vary the illumination levels of the lights. In use, the cameras are used, in sequence, to record images of the vehicle. For convenience, it will be assumed that a single row of cameras 60 - 70 are to be used to record the image one side of the vehicle. The first camera 60, is selected by the controller 100 as the active camera. The lights 40 - 50 are then controlled such that lights 40 and 42 are dimmed, in order to prevent the camera image from being washed out, and lights 44 - 50 are illuminated. The level of illumination of the lights 44 - 50 may also be varied such that 44 is not as brightly illuminated as light 46.

In an embodiment of the present invention, the illumination is adjustable between a plurality of pre-set lighting levels. The levels can be determined by experiment as the levels may vary depending on the size of the booth.

Thus as each camera is used to record an image, it's nearest light is dimmed, as may be those lights adjacent it. The lights on the opposing side of the booth are also dimmed.

The images from the cameras are stored in turn to create a visual record of the state of the car. The images may then be analysed by computer in order to look for blemishes, or deviations from manufacturing tolerances, for example in the gap between the door and a wing, positioning of badges, grills and the like. For those systems used by car hire companies it is envisages that a further camera will be provided in order to capture a picture of the drivers face when he hires and returns the vehicle.

The processing software may perform neural net based comparisons of the vehicle under test with known good vehicle after a suitable training phase.

It will be appreciated that further modifications may be made to the inspection booth. For example, cameras may be mounted on a moveable hoop which moves internally of the tunnel, or externally of the wall 4 so as to bring the cameras into alignment with the various apertures or without a tunnel, such that one camera may be used to take multiple images from different positions.

The data from the camera images may be reduced to vectors or compressed for improved storage and/or pre-processed for subsequent analysis.

It is thus possible to provide a vehicle inspection apparatus wherein the light sources can be controlled in such a manner to obtain images of a vehicle for storage and analysis. The use of relatively low levels of illumination, together with the dimming of illumination adjacent the camera under use, is counterintuitive, but has been found to provide improved results.

## Claims

1. A vehicle inspection apparatus, characterised by comprising a vehicle inspection booth (2), a plurality of cameras (20, 20a, 22, 22a, 24, 24a, 60-70) for observing a vehicle within the booth (2), a plurality of controllable light sources (12, 40-50), and a light source controller (100) for varying the output of the light sources as a function of the position of the camera being used to view the vehicle.

2. An inspection apparatus as claimed in claim 1, characterised the lights are arranged in an array along the booth (2).

3. An inspection apparatus as claimed in claim 1 or 2, characterised in that the lights are arranged in a linear array below the level of a surface (6) on which, in use, a vehicle stands.

4. An inspection apparatus as claimed in claim 3, characterised in that the surface (6) is provided with lip portions (14) which serve to prevent light from the light sources (12) directly illuminating the vehicle.

5. An inspection apparatus as claimed in any one of the preceding claims, characterised in that the wall (4) of the booth (2) is curved so as to form a diffuse reflecting surface.

6. An inspection apparatus as claimed in claim 5, characterised in that the curvature is selected such that a light source provides approximately constant illumination over a section of a vehicle adjacent that light source.

7. An inspection apparatus as claimed in any one of the preceding claims in which the wall (4) forms a diffusing reflector such that an image of the light source is not reflected from the vehicle being inspected.

8. An inspection apparatus as claimed in any one of the preceding claims in which one or more cameras (20, 20a) are associated with a light or group of lights.

9. An inspection apparatus as claimed in claim 8, characterised in that a camera or group of cameras are arranged above a light source, or where the light source is elongate over the centre point thereof or offset therefrom by a predetermined distance.

10. An inspection apparatus as claimed in any one of the preceding claims, characterised in that the lighting controller (100) is arranged to control the lights (12, 40-50) such that when a given camera is being used to observe the vehicle, an or each light associated therewith is dimmed or extinguished.

11. An inspection apparatus as claimed in claim 10, characterised in that lights adjacent the camera being used to observe the vehicle are also dimmed or extinguished.

12. An inspection apparatus as claimed in any one of the preceding claims, characterised in that the cameras (20, 20a, 22, 22a, 60-70) are used in sequence to capture differing views of the vehicle and the light controller controls the light output such that the light sources adjacent the camera in use are dimmed, thereby ensuring that the image received by the camera does not become washed out.

13. An inspection apparatus as claimed in any one of the preceding claims further comprising storage means so as to form an archive of the condition of a vehicle.

14. An inspection apparatus as claimed in any one of the preceding claims, further comprising an automated image analysis means to detect blemishes, damage or deviations from tolerance in the body of the vehicle.

15. An inspection apparatus as claimed in any one of the preceding claims, characterised in that the booth is provided with doors or shutters at the ends thereof to exclude ambient light.

16. A lighting controller for controlling the lights of an inspection apparatus having a plurality of cameras, wherein the controller is arranged to vary the intensity of the lights (12, 40-50) in a predetermined fashion with those lights adjacent a camera being dimmed or extinguished whilst that camera is active.
